# EUROPÄISCHE PATENTSCHRIFT

(11) **EP 3 366 417 B1**
(45) Veröffentlichungstag und Bekanntmachung des Hinweises auf die Patenterteilung: **18.08.2021**
(21) Anmeldenummer: 18157677.8
(22) Anmeldetag: 20.02.2018
(51) Int. Cl.: B23Q 1/00

(54) **SPANNBOLZEN EINES NULLPUNKTSPANNSYSTEMS**
PULL BOLT OF A ZERO POINT CLAMPING SYSTEM
BOULON DE TENSION D'UN SYSTÈME DE SERRAGE

(30) Priorität: 22.02.2017 DE 102017103609
(43) Veröffentlichungstag der Anmeldung: 29.08.2018
(73) Patentinhaber: Schunk GmbH & Co. KG Spann- und Greiftechnik, 74348 Lauffen am Neckar (DE)
(72) Erfinder: SCHWEIZER, Sascha, 72511 Bingen (DE); SCHWENDELE, Florian, 88525 Dürmentingen (DE)
(74) Vertreter: DREISS Patentanwälte PartG mbB

(56) Entgegenhaltungen:
- EP-A1- 0 858 864
- DE-A1- 19 921 270

## Beschreibung

Die Erfindung betrifft ein an einem Werkstück oder Werkstückträger befestigbaren Spannbolzen eines Nullpunktspannsystems, der zum Spannen des Werkstücks in eine Spannaufnahme des Nullpunktspannsystems eingeführt wird, und von der Spannaufnahme eingezogen und verriegelt wird. Die Erfindung betrifft außerdem ein Befestigungssystem zur Befestigung des Spannbolzens am Werkstück.

Nullpunktspannsysteme beziehungsweise zugehörige Spannbolzen sind beispielsweise aus der DE 10 2010 007 924 A1, der DE 10 2010 013 912 A1 oder der DE 197 05 bekannt. Die Spannbolzen sind hier als Einzugsspannbolzen ausgebildet, die einen konusflächigen Angriffsabschnitt aufweisen gegen den Verriegelungselemente der Spannaufnahme derart wirken, dass der Bolzen beim Verriegeln in die Spannaufnahme eingezogen wird.

Mit Nullpunktspannsystemen werden zu bearbeitende Werkstücke, oder Werkstückträger, in oder an denen die Werkstücke angeordnet sind, wiederholbar positionsgenau gespannt. Die Spannbolzen können unmittelbar am Werkstück angeordnet sein. Ebenfalls ist denkbar, dass die zu bearbeitenden Werkstücke auf Spannplatten oder auf Spannmodulen oder auf sonstigen Trägern angeordnet sind, die dann die Spannbolzen aufweisen. Wenn im Nachfolgenden davon die Rede ist, dass der Spannbolzen an einem Werkstück befestigbar ist, ist damit ebenfalls gemeint, dass der Spannbolzen an einer Spannplatte oder einem Spannmodul oder einem anderem Werkstückträger angeordnet sein kann.

Bei dem bekannten Stand der Technik wird der Spannbolzen mittels einer Befestigungsschraube an dem Werkstück befestigt oder in das Werkstück eingetrieben, wobei das Werkstück dazu eine entsprechend tiefe Aufnahme vorzusehen hat. Zur Befestigung des Spannbolzens am Werkstück ist somit ein Werkstück erforderlich, das eine gewisse Materialdicke vorsieht. Werkstücke, die nur sehr flach beziehungsweise dünn ausgebildet sind, können mittels derartigen Spannbolzen nicht gespannt werden.

Aus der DE 199 21 270 A1 ist ein Spannsystem mit einem Spannbolzen bekannt, wobei der Spannbolzen die Merkmale des Oberbegriffs des Patentanspruchs 1 aufweist. Aus der EP 0 858 864 A1 ist ein Schnellspannsystem bekannt, bei dem Spannbolzen an einer Trägerplatte befestigt sind.

Der vorliegenden Erfindung liegt die Aufgabe zu Grunde, einen Spannbolzen für ein Spannbolzensystem sowie ein zugehöriges Werkstück bereitzustellen, so dass der Spannbolzen auch an einem Werkstück angeordnet werden kann, das nur eine geringe Dicke beziehungsweise Materialstärke aufweist.

Diese Aufgabe wird durch einen Spannbolzen mit den Merkmalen des Patentanspruchs 1 gelöst. Dadurch kann ein sicheres Befestigen des Spannbolzens am Werkstück erreicht werden, ohne dass das Werkstück eine besondere Dicke, also Erstreckung in Axialrichtung, aufweisen muss.

Das Stellglied ist axial bewegbar und weist wenigstens einen Schrägzug auf, wobei
der Verriegelungskörper mit dem Schrägzug bewegungsgekoppelt und als Schieber ausgebildet ist, so dass beim axialen Bewegen des Stellglieds der Schieber in radialer Richtung zwischen der Freigabestellung und der Befestigungsstellung bewegt wird. Zur Befestigung des Spannbolzens wird folglich der wenigstens eine Schieber quer zur Längsachse des Bolzens gegen den Befestigungsabschnitt beaufschlagt.

Zum axialen Bewegen des Stellglieds ist vorteilhafterweise am Spannbolzen eine Stellschraube vorgesehen, die mit dem Stellglied derart gekoppelt ist, dass beim Verdrehen der Stellschraube das Stellglied in axialer Richtung bewegt wird. Die Bewegungskopplung kann dabei insbesondere über ein Gewinde erfolgen, so dass beim Verdrehen der Schraube das Stellglied auf der Schraube in Axialrichtung bewegt wird. Die Schraube ist vorteilhafterweise so angeordnet, dass deren betätigbarer Schraubenkopf am freien Ende des Bolzens, also auf der dem Werkstück abgewandten Seite des Spannbolzens, zugänglich angeordnet ist. Die Schraube kann beispielsweise einen Innensechskant aufweisen, so dass sie mittels herkömmlichen Schraubendrehern verdrehbar ist.

Das Stellglied kann vorteilhafterweise zwei einander gegenüberliegende oder auch drei in Draufsicht um 60° zueinander versetzt angeordnete Schrägzüge aufweisen, wobei dann jeder Schrägzug mit einem damit bewegungsgekoppelten Schieber zusammenwirkt. Beim Vorsehen von zwei einander gegenüberliegenden Schrägzügen und damit von zwei einander gegenüberliegenden Schiebern wird vorteilhafterweise erreicht, dass ein mittiges Spannen zwischen den Schiebern und den damit zusammenwirkenden Befestigungsabschnitten erzielt wird. Beim Vorsehen von drei Schrägzügen und drei mit den Schrägzügen zusammenwirkenden Schiebern erfolgt vorteilhafterweise eine Zentrierung des Spannbolzens beim Anordnen an dem Werkstück. In diesem Fall sieht das Werkstück vorzugsweise drei Befestigungsabschnitte vor, die auf den Schenkeln eines vorzugsweise gleichseitigen Dreiecks liegen.

Der jeweilige Schrägzug kann dabei einen schräg zur Längsachse verlaufenden, im Querschnitt T-förmig ausgebildeten T-Steg aufweisen. Die Schieber, die mit den T-Stegen zusammenwirken, weisen vorzugsweise eine dazu komplementär ausgebildete, mit dem T-Steg zusammenwirkende T-förmige T-Nut auf. Über das Vorsehen des T-Stegs und der T-Nut kann gewährleistet werden, dass eine axiale Bewegung des Stellglieds in beide Richtungen zu einem aufeinander zu oder voneinander weg Bewegen der beiden Schieber führt. Je nach Steigungswinkel, den der jeweilige Schrägzug mit der Längsachse einschließt, können unterschiedliche Übersetzungen der Bewegung des Stellglieds bezüglich der Bewegung der Schieber realisiert werden.

Die Schieber weisen Hintergriffabschnitte auf, die in der Befestigungsstellung werkstückseitige oder werkstückträgerseitige Befestigungsabschnitte in axialer Richtung hintergreifen. Hierdurch kann erreicht werden, dass in der Befestigungsstellung ein Formschluss in axialer Richtung zwischen den Hintergriffsabschnitten der Schieber und den werkstückseitigen Befestigungsabschnitten erreicht wird, wodurch eine sichere Befestigung der Spannbolzen an dem Werkstück oder Werkstückträger erreicht werden kann.

Der Hintergriffsabschnitt kann dabei einen Hintergriffswinkel von 50° bis 70° und insbesondere im Bereich von 60° einschließen.

Ferner hat sich als vorteilhaft erwiesen, wenn der Schrägzug einen Steigungswinkel von 15° bis 25° und insbesondere im Bereich von 19° aufweist. Es hat sich gezeigt, dass sich hieraus ein günstiges Übersetzungsverhältnis ergibt.

Der Spannbolzen kann zudem ein Grundteil zur Aufnahme des Stellglieds und des wenigstens einen Schiebers aufweisen. Das Grundteil kann dabei Führungsabschnitte zur Bewegungsführung des Stellglieds und der Schieber vorsehen. Ferner kann das Grundteil zudem die Stellschraube verliersicher aufnehmen.

Ferner ist vorteilhaft, wenn am Grundteil Führungsstifte zur linearen Führung der Schieber in axialer Richtung vorgesehen sind. Hierdurch kann eine definierte Bewegungsbahn der Schieber quer zur Verstellrichtung des Stellelements erreicht werden.

Die eingangs genannte Aufgabe wird auch gelöst durch ein Befestigungssystem, das einen erfindungsgemäßen Spannbolzen und ein Werkstück oder einen Werkstückträger mit einem Befestigungsabschnitt zur Aufnahme des wenigstens einen Verriegelungskörper bzw. des Schiebers des Spannbolzens aufweist. Da sich der Verriegelungskörper bzw. der Schieber beim Verlagern aus der Freigabestellung in die Befestigungsstellung lediglich in radialer Richtung bewegt, und der werkstückseitige Befestigungsabschnitt deshalb sehr flach ausgebildet werden kann, kann damit der Spannbolzen funktionssicher am Werkstück angeordnet werden, ohne dass das Werkstück eine besondere Dicke oder Stärke aufweisen muss.

Der Befestigungsabschnitt ist vorzugsweise als in das Werkstück oder in den Werkstückträger eingelassene Aufnahme ausgebildet. Die Aufnahme kann dabei nur wenige Millimeter und insbesondere im Bereich von 2 bis 4 mm tief in das Werkstück eingelassen sein. Bei Vorsehen von zwei einander gegenüberliegenden Schiebern ist die Ausnehmung vorzugsweise rechteckig ausgebildet und weist zwei einander gegenüberliegende Befestigungsabschnitte auf. Die Schieber verspannen beziehungsweise verkeilen dann an den Befestigungsabschnitten.

Die Aufnahme kann dabei eine Grundfläche und Seitenwandungen aufweisen, wobei die Grundfläche und die Seitenwandungen vorzugsweise einen spitzen Winkel im Bereich von 50° bis 70° und insbesondere im Bereich von 60° einschließen. Dieser Winkel entspricht vorzugsweise dem Winkel der Hintergriffsabschnitte, so dass diese flächig an den Seitenwandungen zum Anliegen kommen.

Weitere Einzelheiten und vorteilhafte Ausgestaltungen der Erfindung sind der nachfolgenden Beschreibung zu entnehmen, anhand derer ein Ausführungsbeispiel der Erfindung beschrieben und erläutert ist.

Es zeigen:
Figur 1 einen erfindungsgemäßen Spannbolzen an einem Werkstück in Schrägansicht von unten;
Figur 2 den Spannbolzen gemäß Figur 1 in Schrägansicht von oben;
Figur 3 ein Längsschnitt durch den Spannbolzen gemäß Figur 1 in der Freigabestellung;
Figur 4 den Spannbolzen gemäß Figur 3 in der Befestigungsstellung;
Figur 5 das Grundteil des Spannbolzens gemäß Figur 3 in zwei Ansichten;
Figur 6 das Stellglied des Spannbolzens gemäß Figur 3 in Einzelteildarstellung in zwei Ansichten;
Figur 7 den Schieber des Bolzens gemäß Figur 3 als Einzelteildarstellung in zwei Ansichten.

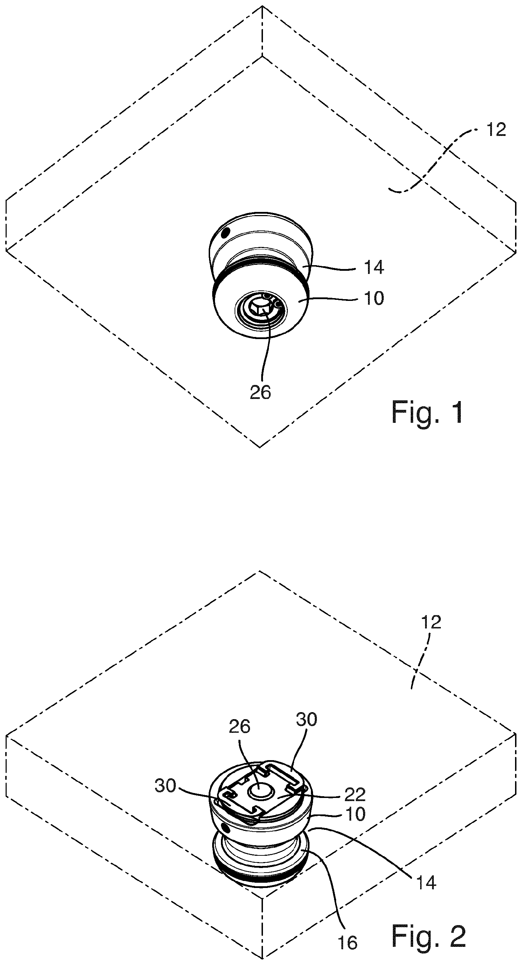

In den Figuren 1 und 2 ist ein Spannbolzen 10 gezeigt, der an einem Werkstück 12 befestigt ist. Der Spannbolzen 10 weist eine umlaufende Nut 14 mit einer Einführschräge 16 auf. Zum Spannen des Werkstücks 12 wird der Spannbolzen 10 in eine nicht dargestellte Spannaufnahme eines Nullpunktspannsystems eingeführt. Über spannaufnahmeseitige Verriegelungskörper kann der Spannbolzen 10 in die Spannaufnahme eingezogen und dort sicher verriegelt werden. Nach einer Verriegelung kann das Werkstück 12 einer Bearbeitung unterzogen werden. Anstelle des Werkstücks 12 ist auch denkbar, dass das Werkstück 12 als Werkstückträger ausgebildet ist, an welchem das eigentlich zu bearbeitende Werkstück vorgesehen ist.

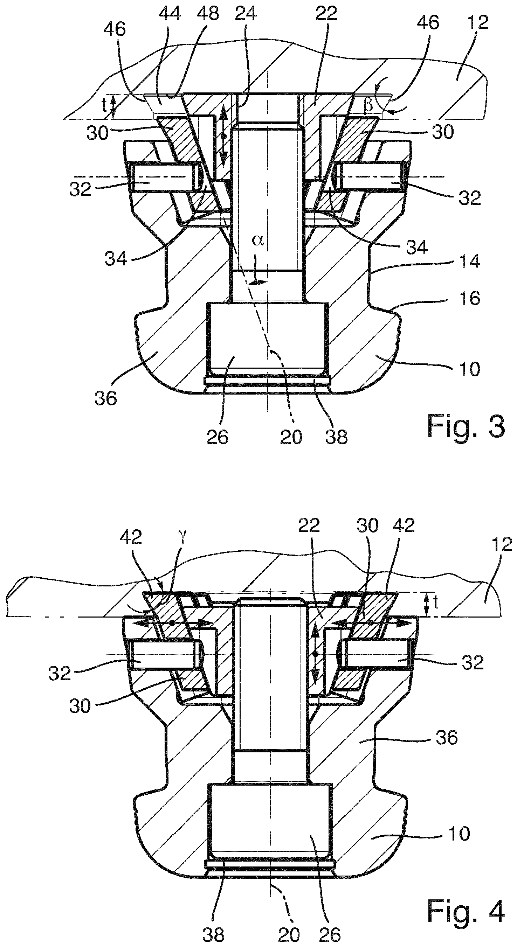

Anhand der Figuren 3 und 4 wird im Folgenden beschrieben, wie der Spannbolzen 10 am Werkstück 12 befestigt ist.

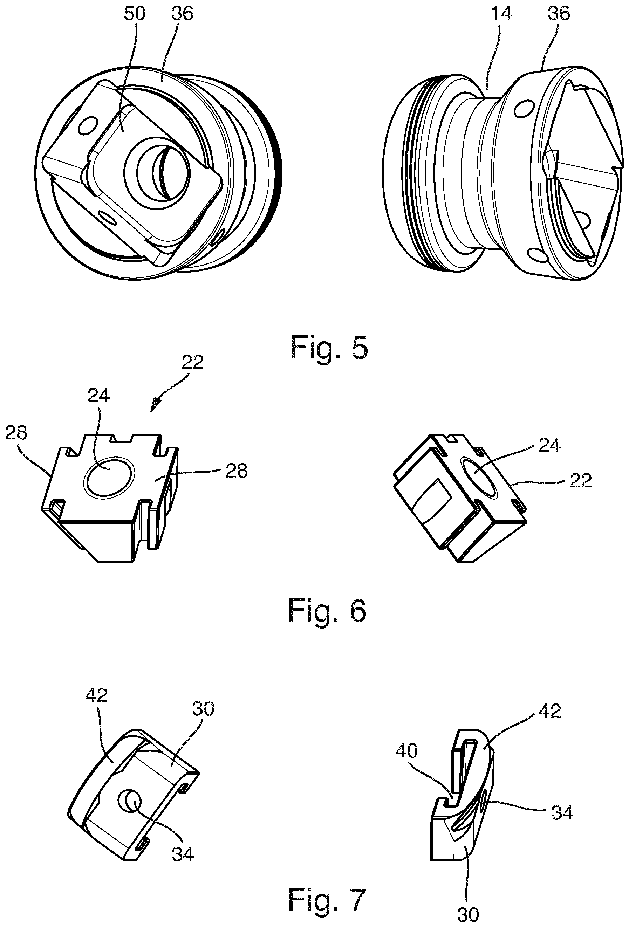

Der Spannbolzen 10 umfasst ein in axialer Richtung, also in Richtung der Längsachse 20 bewegbares Stellglied 22. Zur axialen Verstellung des Stellglieds 22 weist dieses eine Gewindebohrung 24 auf, in welche das freie Ende einer Stellschraube 26 eingreift. Die Stellschraube 26 ist um die Längsachse 20 verdrehbar gelagert, wobei durch Verdrehen der Stellschraube 26 das Stellglied 22 in axialer Richtung hin zum Werkstück 12 oder weg vom Werkstück 12 bewegt wird. In der Figur 3 befindet sich das Stellglied 22 in einer dem Werkstück 12 nahen Position. Das Stellglied 22 umfasst ferner zwei einander gegenüberliegende Schrägzüge 28, die in Figur 6, die das Stellglied 22 als Einzelteil zeigt, deutlich zu erkennen sind. Die Schrägzüge 28 sind im Querschnitt als T-förmig ausgebildete T-Stege realisiert. Der Schrägzug 28, beziehungsweise die jeweiligen T-Stege schließen dabei, wie aus Figur 3 deutlich wird, mit der Mittellängsachse 20 einen Winkel α von vorzugsweise 19° ein.

Mit den Schrägzügen 28 sind als Schieber 30 ausgebildete Verriegelungskörper bewegungsgekoppelt, die in axialer Richtung, also quer zur Längsachse 20, verlagerbar sind. Zur definierten Bewegungsführung der Schieber 30 sind Zylinderstifte 32 vorgesehen, welche in Führungsausnehmungen 34 der Schieber 30 eingreifen. Die Zylinderstifte 32 sind dabei an einem Grundteil 36 des Spannbolzens 10 befestigt, das in Figur 5 als Einzelteil gezeigt ist.

Wie aus Figur 5 deutlich wird, weist das Grundteil 36 eine Ausnehmung 50 zur Aufnahme des Stellglieds 22, der Schieber 30 und der Zylinderstifte 32 auf. Zudem kann die Stellschraube 26 sicher im Grundteil 36 untergebracht werden. In der Befestigungsstellung, also bei Anordnung des Spannbolzens 10 am Werkstück 12 deckt, wie in Figur 4 gezeigt, das Grundteil 36 das Stellglied 22 und die Schieber 30 vollständig schützend ab.

Wie ferner aus Figur 3 und 4 deutlich wird, ist die Stellschraube 26 ebenfalls im Grundteil 36 drehbar gelagert und mittels eines Sicherungsrings 38 verliersicher gelagert.

Die Führungsausnehmungen 34 sind auch in Figur 7, in welcher die Schieber 30 als Einzelteile dargestellt sind, deutlich zu erkennen. Ferner wird aus Figur 7 deutlich, dass die Schieber 30 T-förmige T-Nuten 40 aufweisen, in welche die T-förmige Stege der Schrägzüge 28 des Stellglieds 22 zur Bewegungskopplung eingreifen.

Die Schieber 30 weisen an ihren dem Werkstück 12 zugewandten Seiten Hintergriffsabschnitte 42 auf, die zur Befestigung des Spannbolzens 10 am Werkstück 12 in eine werkstückseitige Aufnahme 44 eingreifen. Die Aufnahme 44 weist dabei einander gegenüberliegende Befestigungsabschnitte 46 auf sowie eine Bodenfläche 48. Die Befestigungsabschnitte 46, die von den Seitenwänden der Aufnahme 44 gebildet werden, schließen dabei mit der Bodenfläche 48 einen Winkel β von vorzugsweise 60° ein. Die Hintergriffsabschnitte 42 schließen einen entsprechenden Hintergriffswinkel von insbesondere γ = 60° ein.

In der Figur 3, die die Freigabestellung zeigt, befindet sich das Stellglied 22 in der dem Werkstück 12 zugewandten Stellung. Auf Grund der Bewegungskopplung der Schieber 30 mit dem Stellglied 22 befinden sich die Schieber 30 in der radial innenliegenden Freigabestellung. Der Spannbolzen 10 kann deshalb vom Werkstück 12 abgenommen oder auf dieses aufgesetzt werden. Wird nach dem Einsetzen des Spannbolzens 10 in die Aufnahme 44 zur Befestigung des Spannbolzens 10 am Werkstück 12 die Stellschraube 26 entsprechend verdreht, bewegt sich das Stellglied 22 in axialer Richtung hin zum Schraubenkopf. Auf Grund der Bewegungskopplung der Schieber 30 mit dem Stellglied 22 bewegen sich die Schieber 30 nach radial außen, wie in Figur 4 gezeigt. Die Schieber 30 beziehungsweise ihre Hintergriffsabschnitte 42 hintergreifen dann die werkstückseitigen Befestigungsabschnitte 46. Auf Grund des Hintergriffswinkels γ beziehungsweise des werkstückseitigen Winkels β der Befestigungsabschnitte 46 wird zudem der Spannbolzen 10, beziehungsweise dessen Grundteil 36 sicher gegen das Werkstück 12 gezogen und dort verspannt. Beim axialen Bewegen des Stellglieds 22 werden die Schieber 30 auf Grund des Vorsehens der Zylinderstifte 32 sicher in radialer Richtung geführt, bis sich die Schieber in der Figur 4 gezeigten Befestigungsstellung befinden.

Auf Grund des Hintergriffs der Schieber 30 in der Ausnehmung 44 erfolgt zudem ein formschlüssiges Fügen des Spannbolzens 10 mit dem Werkstück 12. Die Tiefe t der Ausnehmung 44 kann nur wenige Millimeter betragen; dennoch kann ein sicheres Anordnen des Spannbolzens 10 am Werkstück 12 realisiert werden.

Befestigungsabschnitte 46. Auf Grund des Hintergriffswinkels γ beziehungsweise des werkstückseitigen Winkels β der Befestigungsabschnitte 46 wird zudem der Spannbolzen 10, beziehungsweise dessen Grundteil 36 sicher gegen das Werkstück 12 gezogen und dort verspannt. Beim axialen Bewegen des Stellglieds 22 werden die Schieber 30 auf Grund des Vorsehens der Zylinderstifte 32 sicher in radialer Richtung geführt, bis sich die Schieber in der Figur 4 gezeigten Befestigungsstellung befinden.

Auf Grund des Hintergriffs der Schieber 30 in der Ausnehmung 44 erfolgt zudem ein formschlüssiges Fügen des Spannbolzens 10 mit dem Werkstück 12. Die Tiefe t der Ausnehmung 44 kann nur wenige Millimeter betragen; dennoch kann ein sicheres Anordnen des Spannbolzens 10 am Werkstück 12 realisiert werden.

## Patentansprüche

1. An einem Werkstück (12) oder Werkstückträger befestigbarer Spannbolzen (10) eines Nullpunktspannsystems, der zum Spannen des Werkstücks (12) oder Werkstückträgers in eine Spannaufnahme des Nullpunktspannsystems einziehbar und dort verriegelbar ausgebildet ist, wobei der Spannbolzen (10) ein bewegbares in axialer Richtung bewegbares Stellglied (22) mit einem bewegungsgekoppelten Verriegelungskörper (30) derart aufweist, dass beim Bewegen des Stellglieds (22) der Verriegelungskörper (30) in radialer Richtung zwischen einer Freigabestellung und einer Befestigungsstellung bewegt wird, wobei der Verriegelungskörper (30) zur Befestigung des Spannbolzens (10) am Werkstück (12) oder Werkstückträger in der Befestigungsstellung gegen einen werkstückseitigen oder werkstückträgerseitigen Befestigungsabschnitt (46) wirken kann, **dadurch gekennzeichnet, dass** das Stellglied (22) wenigstens einen Schrägzug (28) aufweist, dass der Verriegelungskörper (30) mit dem Schrägzug (28) bewegungsgekoppelt und als Schieber (30) ausgebildet ist, so dass beim axialen Bewegen des Stellglieds (22) der Schieber (30) in radialer Richtung zwischen der Freigabestellung und der Befestigungsstellung bewegt wird, wobei der Schieber (30) einen Hintergriffsabschnitt (42) aufweist, der in der Befestigungsstellung den Befestigungsabschnitt (46) in axialer Richtung hintergreifen kann.

2. Spannbolzen (10) nach Anspruch 1, **dadurch gekennzeichnet, dass** eine sich in axialer Richtung erstreckende, verdrehbar angeordnete Stellschraube (26) vorgesehen ist, über die das Stellglied (22) in axialer Richtung bewegt werden kann.

3. Spannbolzen (10) nach Anspruch 1 oder 2, **dadurch gekennzeichnet, dass** das Stellglied zwei einander gegenüber liegende oder drei in Draufsicht um 60° zueinander versetzt angeordnete Schrägzüge (28) aufweist, wobei jeder Schrägzug (28) mit einem damit bewegungsgekoppelten Schieber (30) zusammen wirkt.

4. Spannbolzen (10) nach Anspruch 1, 2 oder 3, **dadurch gekennzeichnet, dass** der jeweilige Schrägzug (28) einen schräg zur Längsachse verlaufenden, im Querschnitt T-förmig ausgebildeten T-Steg aufweist und dass der wenigstens eine Schieber (30) eine dazu komplementär ausgebildete, mit dem T-Steg zusammen wirkende T-förmige T-Nut (40) aufweist.

5. Spannbolzen (10) nach einem der vorhergehenden Ansprüche, **dadurch gekennzeichnet, dass** der Hintergriffsabschnitt (42) einen Hintergriffswinkel (γ) von 50°-70° und insbesondere im Bereich von 60° einschließt.

6. Spannbolzen (10) nach einem der Ansprüche 1 bis 5 **dadurch gekennzeichnet, dass** der Schrägzug (28) einen Steigungswinkel α von 15° bis 25° und insbesondere im Bereich von 19° aufweist.

7. Spannbolzen (10) nach einem der Ansprüche 1 bis 6, **dadurch gekennzeichnet, dass** der Spannbolzen (10) ein Grundteil (36) zur Aufnahme des Stellglieds (22) und des wenigstens einen Schiebers (30) aufweist.

8. Spannbolzen (10) nach einem der Ansprüche 1 bis 7, **dadurch gekennzeichnet, dass** am Grundteil (36) Führungsstifte (32) zur linearen Führung der Schieber (30) in axialer Richtung vorgesehen sind.

9. Befestigungssystem, umfassend einen Spannbolzen (10) nach einem der vorhergehenden Ansprüche und ein Werkstück (12) oder einen Werkstückträger mit einem Befestigungsabschnitt (46) zur Aufnahme des wenigstens einen Verriegelungskörpers (30) des Spannbolzen (10).

10. Befestigungssystem nach Anspruch 9, **dadurch gekennzeichnet, dass** der Befestigungsabschnitt (46) als in das Werkstück (12) oder in den Werkstückträger eingelassene Aufnahme (44) ausgebildet ist.

11. Befestigungssystem nach Anspruch 10, **dadurch gekennzeichnet, dass** die Aufnahme (44) eine Grundfläche (48) und eine Seitenwandung aufweist, wobei die Grundfläche (48) und die Seitenwandung einen Winkel β von 50° bis 70° und insbesondere im Bereich von 60° einschließen.

## Claims

1. Clamping bolt (10) of a zero point clamping system, which bolt can be fastened to a workpiece (12) or workpiece carrier and is designed such that it can be pulled into a clamping receptacle of the zero point clamping system in order to clamp the workpiece (12) or workpiece carrier, and can be locked there, the clamping bolt (10) having a movable actuator (22) which is movable in the axial direction and has a locking body (30) coupled thereto in terms of movement such that, when the actuator (22) is moved, the locking body (30) is moved in the radial direction between a release position and a fastening position, it being possible for the locking body (30) to act against a workpiece-side or workpiece carrier-side fastening portion (46) in order to fasten the clamping bolt (10) to the workpiece (12) or workpiece carrier in the fastening position, **characterized in that** the actuator (22) has at least one oblique formation (28) and **in that** the locking body (30) is coupled in terms of movement to the oblique formation (28) and is designed as a slide (30), such that when the actuator (22) is moved axially the slide (30) is moved in the radial direction between the release position and the fastening position, the slide (30) having an engagement portion (42) which, in the fastening position, can engage behind the fastening portion (46) in the axial direction.

2. Clamping bolt (10) according to claim 1, **characterized in that** an axially extending, rotatably arranged adjusting screw (26) is provided, via which the actuator (22) can be moved in the axial direction.

3. Clamping bolt (10) according to claim 1 or 2, **characterized in that** the actuator has two oblique formations (28) lying opposite one another or three oblique formations arranged offset from one another by 60° in a top view, each oblique formation (28) interacting with a slide (30) coupled thereto in terms of movement.

4. Clamping bolt (10) according to claim 1, 2 or 3, **characterized in that** the particular oblique formation (28) has a T-bar which runs obliquely with respect to the longitudinal axis and has a T-shaped cross section, and **in that** the at least one slide (30) has a complementary T-shaped T-groove (40) which interacts with the T-bar.

5. Clamping bolt (10) according to any of the preceding claims, **characterized in that** the engagement portion (42) encloses an engagement angle (γ) of 50°-70° and in particular in the region of 60°.

6. Clamping bolt (10) according to any of claims 1 to 5, **characterized in that** the oblique formation (28) has a pitch angle α of 15° to 25° and in particular in the region of 19°.

7. Clamping bolt (10) according to any of claims 1 to 6, **characterized in that** the clamping bolt (10) has a base part (36) for receiving the actuator (22) and the at least one slide (30).

8. Clamping bolt (10) according to any of claims 1 to 7, **characterized in that** guide pins (32) are provided on the base part (36) for linear guidance of the slides (30) in the axial direction.

9. Fastening system, comprising a clamping bolt (10) according to any of the preceding claims and a workpiece (12) or a workpiece carrier having a fastening portion (46) for receiving the at least one locking body (30) of the clamping bolt (10).

10. Fastening system according to claim 9, **characterized in that** the fastening portion (46) is designed as a receptacle (44) recessed into the workpiece (12) or into the workpiece carrier.

11. Fastening system according to claim 10, **characterized in that** the receptacle (44) has a base surface (48) and a side wall, the base surface (48) and the side wall enclosing an angle β of 50° to 70° and in particular in the region of 60°.

## Revendications

1. Boulon de tension (10) d'un système de serrage point zéro, pouvant être fixé sur une pièce (12) ou un porte-pièce, pouvant être tiré dans un logement de tension du système de serrage point zéro pour serrer la pièce (12) ou le porte-pièce et pouvant y être verrouillé, dans lequel le boulon de tension (10) présente un actionneur (22) déplaçable dans la direction axiale avec un corps de verrouillage (30) accouplé au mouvement de telle sorte que, lors du déplacement de l'actionneur (22), le corps de verrouillage (30) est déplacé dans la direction radiale entre une position de libération et une position de fixation, dans lequel le corps de verrouillage (30) servant à la fixation du boulon de tension (10) peut agir sur la pièce (12) ou le porte-pièce dans la position de fixation contre une section de fixation (46) du côté de la pièce ou du porte-pièce, **caractérisé en ce que** l'actionneur (22) présente au moins une traction diagonale (28), **en ce que** le corps de verrouillage (30) est accouplé en mouvement avec la traction diagonale (28) et est réalisé sous la forme d'un coulisseau (30), de sorte que, lors du déplacement axial de l'actionneur (22), le coulisseau (30) est déplacé dans la direction radiale entre la position de libération et la position de fixation, dans lequel le coulisseau (30) présente une section de mise en prise arrière (42) qui, dans la position de fixation, peut venir en prise avec la section de fixation (46) dans la direction axiale.

2. Boulon de tension (10) selon la revendication 1, **caractérisé en ce qu'**une vis de réglage (26) s'étendant suivant la direction axiale et disposée en rotation est prévue, par laquelle l'actionneur (22) peut être déplacé dans la direction axiale.

3. Boulon de tension (10) selon la revendication 1 ou 2, **caractérisé en ce que** l'actionneur présente deux tractions diagonales (28) opposées ou trois tractions diagonales disposées en vue en plan, décalées de 60 °, dans lequel chaque traction diagonale (28) coopère avec un coulisseau (30) qui y est accouplé en mouvement.

4. Boulon de tension (10) selon la revendication 1, 2 ou 3, **caractérisé en ce que** la traction diagonale (28) respective présente une traverse en T s'étendant de façon oblique par rapport à l'axe longitudinal et dans une section transversale, et **en ce que** l'au moins un coulisseau (30) présente une rainure en T (40) complémentaire coopérant avec la traverse en T.

5. Boulon de tension (10) selon l'une des revendications précédentes, **caractérisé en ce que** la section de mise en prise (42) entoure un angle de mise en prise (γ) de 50 à 70 ° et en particulier dans la gamme de 60 °.

6. Boulon de tension (10) selon l'une des revendications 1 à 5, **caractérisé en ce que** la traction diagonale (28) présente un angle d'inclinaison de 15 à 25 ° et en particulier dans la gamme de 19 °.

7. Boulon de tension (10) selon l'une des revendications 1 à 6, **caractérisé en ce que** le boulon de tension (10) présente une partie de base (36) destinée à recevoir l'actionneur (22) et l'au moins un coulisseau (30).

8. Boulon de tension (10) selon l'une des revendications 1 à 7, **caractérisé en ce que** des broches de guidage (32) sont prévues au niveau de la partie de base (36) pour le guidage linéaire des coulisseaux (30) dans la direction axiale.

9. Système de fixation comprenant un boulon de tension (10) selon l'une des revendications précédentes et une pièce (12) ou un porte-pièce comportant une section de fixation (46) destinée à recevoir l'au moins un corps de verrouillage (30) du boulon de tension (10).

10. Système de fixation selon la revendication 9, **caractérisé en ce que** la section de fixation (46) est réalisée sous la forme d'un logement (44) inséré dans la pièce (12) ou dans le porte-pièce.

11. Système de fixation selon la revendication 10, **caractérisé en ce que** le logement (44) présente une surface de base (48) et une paroi latérale, dans lequel la surface de base (48) et la paroi latérale forment un angle β de 50 à 70 ° et en particulier dans la plage de 60 °.
